Europäisches Patentamt

European Patent Office

Office européen des brevets

(19)

(11) Publication number: **0 194 122**
**A2**

# (12) EUROPEAN PATENT APPLICATION

(21) Application number: **86301481.7**

(22) Date of filing: **03.03.86**

(51) Int. Cl.⁴: **H02G 7/05**

(30) Priority: **04.03.85 GB 8505511**

(43) Date of publication of application:
**10.09.86 Bulletin 86/37**

(84) Designated Contracting States:
**AT BE CH DE FR GB IT LI NL SE**

(71) Applicant: **N.V. RAYCHEM S.A.**
**Diestsesteenweg 692**
**B-3200 Kessel-lo(BE)**

(72) Inventor: **Nolf, Jean Marie Etienne**
**6, Chaussée de Namur**
**B-5990 Hamme-Mille(BE)**

(74) Representative: **Benson, John Everett et al**
**Raychem Limited Intellectual Property Law**
**Department Swan House 37-39, High Holborn**
**London WC1(GB)**

(54) **Cable clamp.**

(57) A cable clamp for mid-section vertical support or end-section axial support of a cable, comprises a sheet metal cradle that is wrapped around the cable and a wrap-around heat-shrink sleeve that is wrapped around the cable and part of the cradle to grip the cradle to the cable. The load of the cable is thus taken uniformly by the cable jacket over a reasonable area. Access to cable strength members is not required.

Fig.3.

Cable Clamp

The present invention relates to a clamp for holding a cable against a support, particularly for attaching an aerial cable to a pole. It may also be used for holding a pipe.

Where a cable is laid above ground, suspended between poles, two types of cable clamp will generally be required. Firstly, end-section clamps will be required at the beginning and end of each run (and at intermediate positions where slack is required), which transmit axial stress in the cable to the pole or other support. The second type of clamp is a vertically directed weight of the cable, although the axial stresses due to the weight of cable either side of the clamp may be unequal and some axial grip may be required.

End-section clamps used today are simply means for fixing an internal cable strength member to the pole, and mid-section clamps generally either function as such end-section clamps or they merely support the weight of the cable and do not offer resistance to axial movement.

Hitherto it had been thought necessary to fix a cable clamp to a strength member of a cable rather than to the cable jacket, to avoid damage to the cable conductors which would be likely to occur if the cable clamp were to grip the cable jacket with sufficient mechanical force.

Two particular prior art clamping techniques may be mentioned. In one technique the support wire of a catenary cable is attached to a support. Since the support wire of the cable runs separately from the conductors, it may be fixed to the support without interruption to the rest of the cable, The support wire may be outside the cable proper but tied to it, or it may run inside a common jacket.

In a second type of cable a strength member may comprise a braid of a material such as Kevlar (trade name) which surrounds the conductors within a jacket. Where the cable is to be supported, a section of jacket is removed and the Kevlar braid is unravelled, gathered around one side of the conductors and then affixed to the support. This technique has the disadvantage that it is time consuming and that the environmental seal provided by the jacket is broken.

Each of these techniques therefore requires a cable having a suitable strength member, and the second technique has the further disadvantage of requiring damage to the cable jacket.

To overcome these disadvantages, we have designed a cable clamp that can be installed quickly and easily on almost any cable without damage to the conductors, and which employs a dimensionally recoverable (particularly heat-shrinkable) sleeve which can grip to the cable jacket and contribute to the fixing of the rest of the clamp to the cable.

Thus, the invention provides a clamp, capable of holding a cable, which comprises:

a support member through or on which the cable can pass and having means for mechanical attachment to an external support; and

a dimensionally-recoverable wraparound sleeve which on recovery causes or enhances engagement between the cable and the support member and/or through which mechanical stress can be transmitted from the cable to the support member.

The invention also provides a method of securing a cable to an external support, which comprises:

positioning a support member around the cable; and

recovering a dimensionally recoverable wraparound sleeve into engagement with the support member, and the cable thereby causing or enhancing engagement between the support member and the cable or allowing mechanical stress to be transmitted from the cable to the support member.

By an external support we mean a support, such as a pole or connection to a pole, that is not part of the cable or the clamp. Thus, we exclude clamps whose only means for mechanical attachment is solely for fixture to another part of the clamp, to the cable or to a cable accessory which is part of the cable.

The support member may preferably be positioned around the cable in approximately the correct position along the cable before recovery takes place which finally fixes it in position such that axial stress can be borne.

The support member may comprise an open channel, or at least part of it may be closed in cross-section at least when installed. In the case of a mid-section clamp at least, preferably no part within which the cable is to lie is permanently closed in cross-section since that would require a free end of the cable for installation.

We prefer that the support member comprises a central region in the form of an open channel (enclosing from 90° -270°, more preferably about half, of the circumference of the cable) and end portions which on installation form substantially closed rings around the cable. The rings are preferably split so that the cables can be inserted laterally, after which they may be snapped or simply pushed closed. In a preferred embodiment, the rings do not follow closely the entire circumference of the cable but instead are spaced from the cable over a small area of the cable's circumference. This space may accomodate a closure member for the sleeve, which will then not only hold the sleeve in a wrapped-around configuration but will also stop the sleeve rotating with respect to the support member.

The means for mechanical attachment allows for connection to a pole or other support, and its positioning as part of the support member will depend on the direction of stress relative to the support. Thus, where the clamp is an end-section clamp the axial pull of the cable will be substantially horizontal, and the means for mechanical attachment will be preferably a substantially axial extension of that part of the support member that holds the cable. Where, instead, the clamp is a mid-section clamp the resultant pull in the cable will be substantially vertical, and the means for attachment will be preferably in the general form of a handle above that part of the support member that holds the cable.

The means for attachment may include a hole, or a hook or a latch or other mechanical device, by means of which the clamp can be attached directly or indirectly to a pole or other support.

The sleeve may now be mentioned. As indicated above, it is of the wrap-around type for ease of installation. It preferably is provided with an adhesive for bonding to the cable and/or support member, although an adhesive could be provided separately. Preferred adhesives include heat-activatable adhesives, for example hot-melt adhesives and reactive curing adhesives. Where the sleeve is heat-recoverable and the adhesive is heat-activatable, a single heating step may cause recovery and activation. In order to make more certain when recovery and/or activation is complete, a temperature indicator, for example a thermochromic paint on the sleeve, may be provided.

We prefer that the sleeve is mechanically fixed relative to the support member, whether or not any adhesive is present. A technique for preventing relative rotation has already been mentioned (positioning of a closure member of the sleeve in a part of the support member) but other techniques may be employed. For example relative axial movement may be prevented by providing the support member with an axially extending recess or opening into which at least part of the sleeve is positioned or into which at least part of the sleeve recovers. Such a recess or opening may be defined by for example the arms of the handle-like means for attachment referred to above.

The invention is further illustrated by the accompanying drawings, in which:

Figure 1 shows a cable supported on poles;

Figure 2 shows a prior art technique for supporting a cable;

Figure 3 shows the components of a mid-section clamp according to the invention;

Figure 4 shows a mid-section clamp partially installed;

Figure 5 shows an end-section clamp according to the invention; and

Figure 6 and 7 show ways in which stress can be transmitted from a cable to a support member.

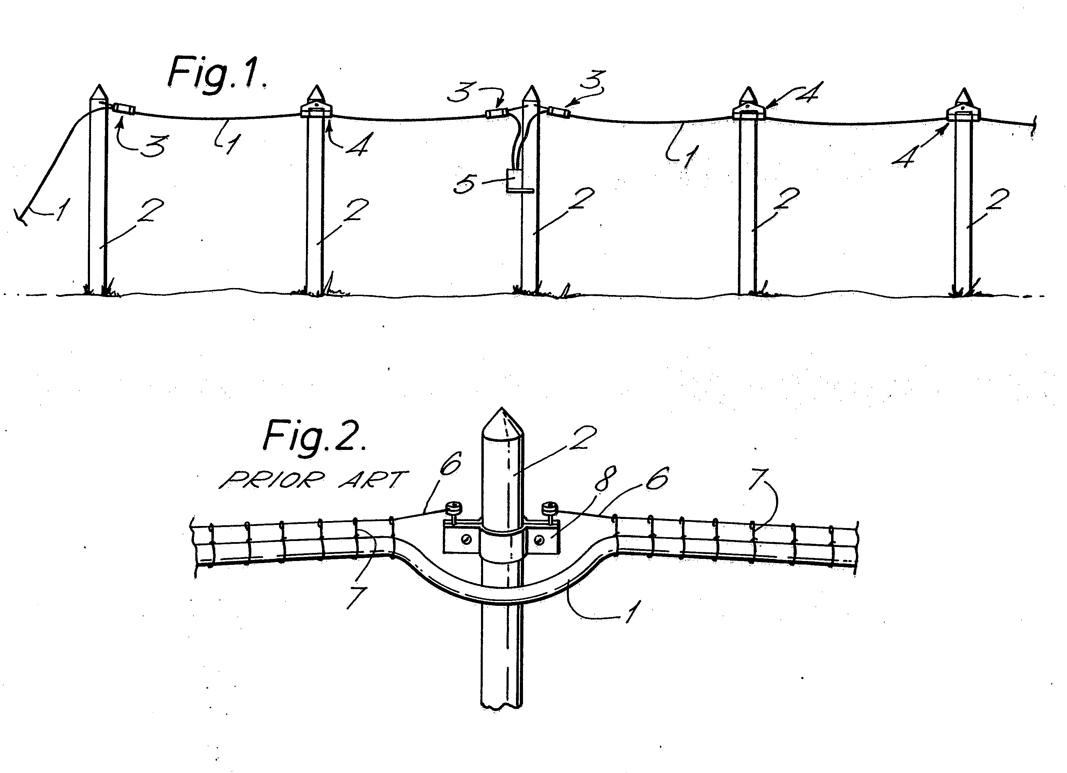

Figure 1 shows a cable 1 supported by a series of poles 2 mounted in the ground. Two types of clamps are schematically represented; an end-section clamp 3 takes stresses axially of the cable, generally horizontally, and mid-section clamps 4 take vertical stresses which result from substantially equal axial stresses in the cable either side of the clamp. End-section clamps may be needed at the beginning or end of a cable run (as indicated on the lefthand side of the Figure) and also where a cable is terminated for example at a repeater 5 or at other regions where slack cable is required.

A prior art technique for attaching a cable 1 to a pole 2 is shown in Figure 2. Here, the cable is supported by a carrier wire 6 from which it is slung by wire supports 7. The carrier wire 6 is terminated at a clamp 8 around the pole 1. The carrier wire and cable proper may be unitary, ie may be encased in the same cable jacket.

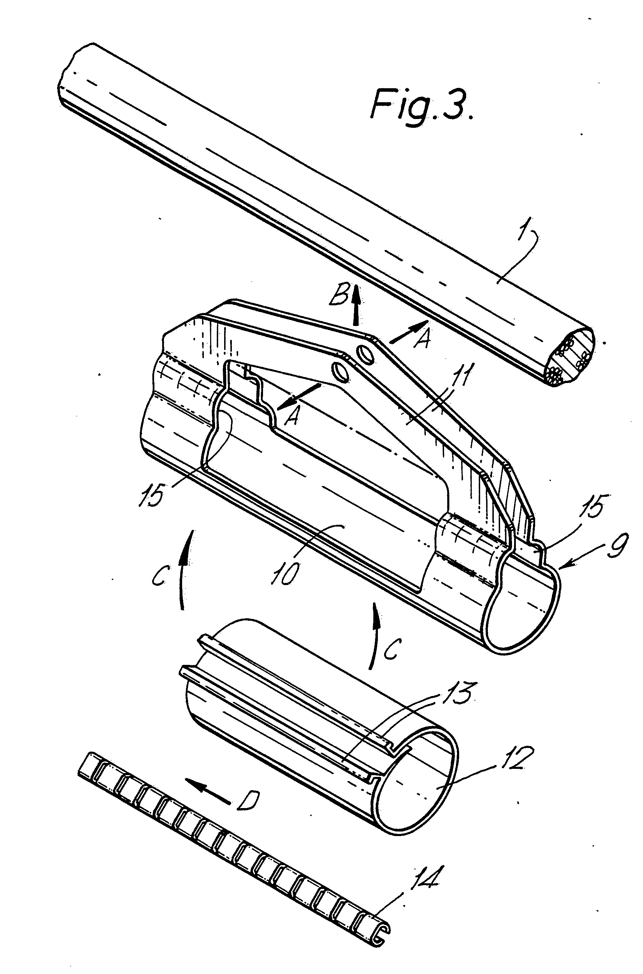

A cable clamp according to the invention is shown in Figure 3, in its disassembled form. A support member 9 comprises a portion 10 in which the cable 1 (for example an optical fibre or other telecommunications cable) is to be positioned, and a means for mechanical attachment 11, which in the embodiment shown is provided with a hole for engagement with a hook or bolt etc on a pole.

The support member 9 is opened as indicated by the arrows A and positioned around the cable (arrow B) so that the cable lies in the channel of the portion 10. Then, the dimensionally recoverable sleeve 12 is wrapped around portion 10 and cable 1 as indicated by the arrows C. The transverse cut-away in the central portion of support member 9 allows the sleeve 12 to be fully wrapped around so that the closure rails 13 abut one another. Then, the closure channel 14 is slid over the rails 13 as indicated by arrow D to hold the rails together.

It will be seen that once the sleeve is installed in the cut-away it will be prevented from significant lateral movement. The rotational orientation of the sleeve is not critical, but we prefer that the rails 13 and channel 14 be aligned with the space 15 between the two thicknesses of the support member 9. This orientation will prevent rotation of the sleeve, if the channel 14 extends into a space, preferably both spaces, 15.

If a tubular rather than wraparound sleeve may be used, in which case the portion 10 must, at least during installation, be accessible by sliding the sleeve from one end. One possibility is to provide the means for mechanical attachment 11 as a centrally extending member (rather than the handle shaped member drawn extending from each end of portion 10) and employ two recoverable sleeves one over the cable and half portion 10 at each side of the means 11.

The size of the cable clamp will of course depend on the material from which it is made and the size and weight of the cable to be supported. A preferred clamp, however, is from 100-200 mm long, especially about 160mm, with the cut-away being from 75-120mm, especially about 100mm long. The length of sleeve should be slightly smaller then the length of the cut-away, especially from 80-98%, especially about 95%. The portion 10 should preferably have a transverse radius of curvature slightly larger than the radius of the cable, for example about 125%, and a size of from 30-60 mm is preferred. The means for attachment 11 preferably allows the cable to be hung from 20-100 mm especially about 40mm below the top of the clamp. These dimensions will be suitable for a cable of about 8mm diameter.

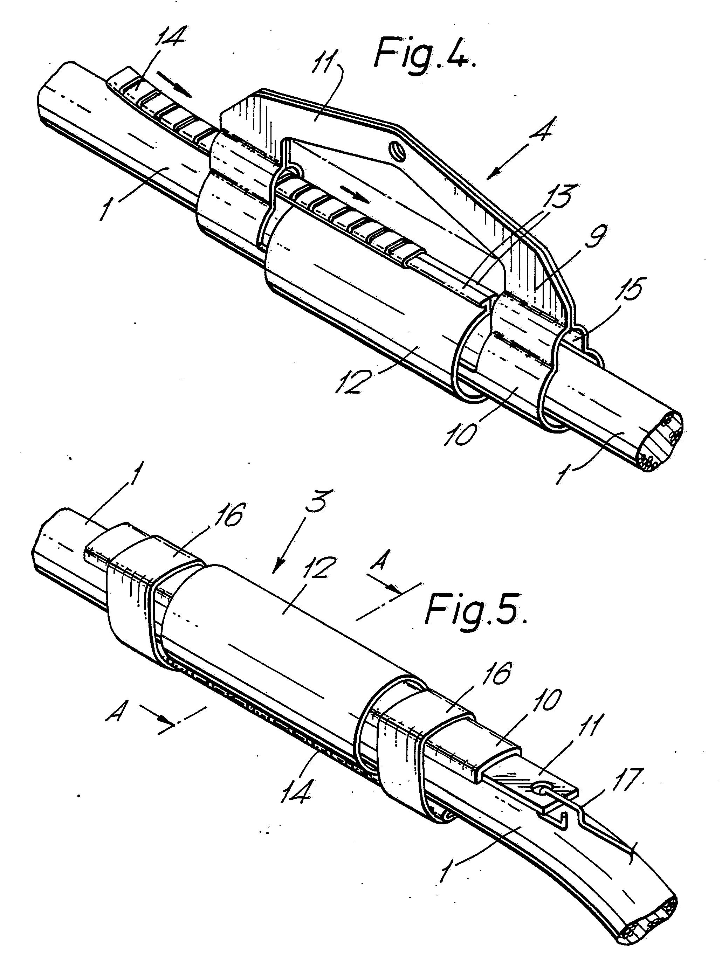

A partially assembled mid-section clamp 4 is shown in Figure 4. The sleeve 12 has been wrapped around the portion 10 of the support member 9. The channel 14 is being slid over the rails 13 as indicated by the arrows. It can be seen that location of the channel 14 in the space 15 prevents rotation of the sleeve 12. After positioning of the sleeve 12 and channel 14, the clamp can still be rotated and slid axially with respect to the cable 1. When it is correctly positioned with respect to the cable, the sleeve is heated or otherwise treated, causing it to recover into engagement with the cable and/or the support member.

An end-section clamp 3 is shown in Figure 5. Its design is similar to that of the mid-section clamp just discussed, except that the means for mechanical attachment 11 is arranged to take stresses axial with respect to the cable 1. A portion 10 in which the cable is positioned is preferably surrounded by rings (which may be wraparound or closed in cross-section) between which the wraparound sleeve 12 is positioned. Where a free end of the cable is available a tubular (rather than wrap-around) sleeve could be used. The clamp is connected to a hook 17 which is attached to a pole or other support. An end-section clamp will in general be longer than a mid-section clamp due to the greater axial stress it will bear. A length of 150-500mm, especially about 300 mm is preferred.

The support member may serve to shield the cable from damage otherwise caused by heat from a gas torch used from heat-recovery of the sleeve 12. For this reason, the support member is preferably made from metal, which will reflect infra-red radiation, for example stainless steel sheet of a thickness from 0.5-2, particularly about 1.0mm.

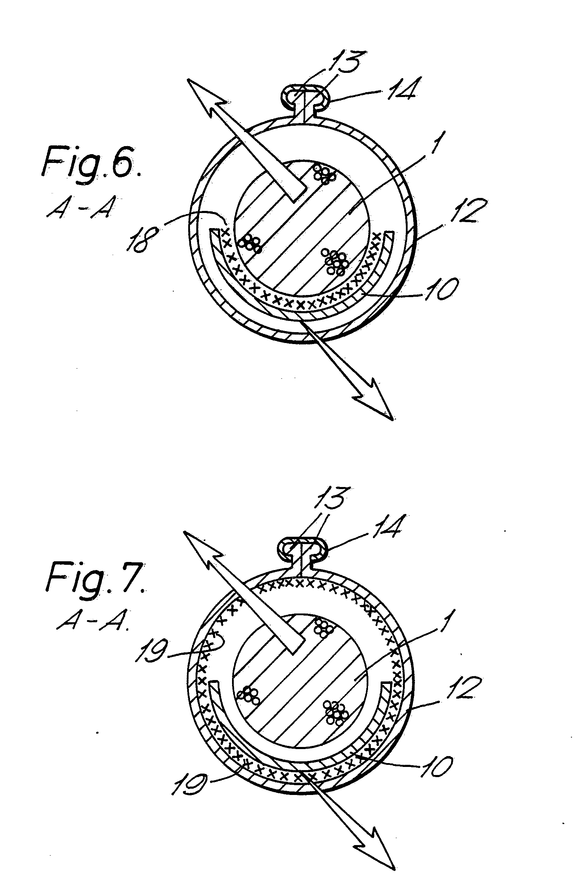

Figures 6 and 7 show transverse cross-sections taken at the plan A-A of Figure 5. A similar cross-section would apply to the mid-section clamp of Figures 3 and 4. The arrows in Figure 6 and 7 are intended to indicate that the cable 1 is being pulled into the plane of the paper and the portion 10 of the support member is being pulled out of the plane of the paper. Portion 10 provides a channel within which the cable is positioned. The channel in transverse cross-section preferably comprises from 90°-270°, especially about 180° of arc of a curved surface, preferably of a circle.

In each of Figures 5 and 6, stress from the cable to the portion 10 is transferred between at least two surfaces which are put in shear. In Figure 6, reliance is put on a high shear strength between the cable and the portion 10, as indicated by the crosses 18. The function of the sleeve is to enhance engagement between these two surfaces. An adhesive may be provided, or one may rely upon friction between the surfaces which may be improved by cleaning and/or roughening.

In Figure 7 the stress is shown transmitted from the cable to the portion 10 entirely through the sleeve 12. Thus, high shear strength is provided between the sleeve 12 and the portion 10 and between the sleeve 12 and the cable 1, as indicated by the crosses 19. As above, an adhesive may be provided or friction may be relied upon. We prefer that the sleeve be coated with adhesive of a type that is activated on heating.

The mechanism of stress transfer shown in Figure 7 will in general be more important than that shown in Figure 6, although in most instances both mechanisms will play a part. Particularly preferred is an arrangement where the sleeve only is coated with an adhesive; thus the crosses 18 represent friction and the crosses 19 represent an adhesive bond together with some mechanical interlocking of the sleeve within the support member as discussed above.

In an alternative to the general design shown in the Figures, the sleeve need not surround a portion of the support member. Instead, the sleeve may surround and grip the cable; and the support member grip the sleeve in some way, for example by gripping closure rails of the sleeve. In one such arrangement the support member may comprise an extension to a closure channel.

## Claims

1. A clamp, capable of holding a cable, which comprises:

a support member through or on which the cable can pass and having means for mechanical attachment to an external support; and

a dimensionally-recoverable wrap-around sleeve which on recovery causes or enhances engagement between the cable and the support member and/or through which mechanical stress can be transmitted from the cable to the support member.

2. A clamp according to claim 1, in which the support member includes a channel in which the cable can be positioned.

3. A clamp according to claim 2 in which the channel in transverse cross-section comprises from 90°-270° of arc of a curved surface.

4. A clamp according to any preceding claim, which can be installed around a cable transversely with respect to the cable.

5. A clamp according to any preceding claim, in which the sleeve is a wrap-around sleeve having longitudinally extending closure members at opposed edge portions that can be held together to maintain the sleeve in a wrapped around configuration.

6. A clamp according to any preceding claim additionally comprising an adhesive for bonding the sleeve to the support member and/or the cable.

7. A clamp according to claim 6, in which the sleeve has a coating of adhesive thereon.

8. A clamp according to claim 7, in which the adhesive is heat-activatable and the sleeve is heat-shrinkable.

9. A clamp according to claim 8, in which the sleeve has on a surface that will be visible on installation a thermochromic paint.

10. A clamp according to claim 1, substantially as herein described with reference to any of Figures 3-7 of the accompanying drawings.

11. A method of securing a cable to an external support, which comprises:

positioning a support member around the cable; and

recovering a dimensionally recoverable wraparound sleeve into engagement with the support member, and the cable thereby causing or enhancing engagement between the support member and the cable or allowing mechanical stress to be transmitted from the cable to the support member.

Fig.1.

Fig.2.
PRIOR ART

# Fig.3.

0 194 122

Fig.4.

Fig.5.

Fig.6.
A-A

*13*

*14*

*1*

*18*

*12*

*10*

Fig.7.
A-A.

*13*

*14*

*1*

*19*

*12*

*19*

*10*